# EUROPEAN PATENT APPLICATION

(11) **EP 2 787 187 A1**
(43) Date of publication of application: **08.10.2014**
(21) Application number: 13162059.3
(22) Date of filing: 03.04.2013
(51) Int. Cl.: F01N 3/20, F04B 17/04

(54) **Reagent dosing pump**

(71) Applicant: Delphi International Operations Luxembourg S.à r.l., 4940 Bascharage (LU)
(72) Inventor: Wright, Keith, Chatham, Kent ME5 7RS (GB)
(74) Representative: Neill, Andrew Peter

(57) **Abstract**

A pump (200) for pumping a liquid, the pump comprising: an inlet means (202); a first outlet means (201); a first pumping chamber (154) for receiving the liquid from the inlet means; a plunger assembly (126, 128) arranged to move from a first position to a second position during a pumping stroke and from the second position to the first position during a return stroke and an actuator arrangement (70, 104) arranged to move the pumping assembly from the first position to the second position during the pumping stroke in order to pump the liquid from the first pumping chamber (154) into the first outlet means (201); further comprising: a second outlet means (207); a second pumping chamber (210) for receiving the liquid from the inlet means wherein the plunger assembly (126) is arranged to pump the liquid from the second pumping chamber (210) into the second outlet means (207) during the return stroke.

## Description

### Field of the invention

This invention relates to a device for use in a system for dosing exhaust gases with reagent, for example to reduce emissions of harmful substances to the atmosphere. In particular, the invention relates to a pump for dispensing reagent.

### Background to the invention

It is well known that exhaust gases from internal combustion engines contain substances which are harmful to the environment and which can pose a threat to public health. For many years, a sustained effort has been made within the automotive industry to reduce the release to the atmosphere of harmful substances carried in exhaust gases, both by modifying the combustion process itself to give a reduced yield of harmful combustion products, and by treating the exhaust gases before their emission into the atmosphere, for example by providing a catalyst to induce chemical breakdown of the harmful constituents into benign compounds.

One class of harmful exhaust gas constituents comprises the oxides of nitrogen, with the generic chemical formula NO*ₓ*, where x typically ranges from 0.5 to 2.5. Nitrogen oxides contribute to the formation of ground-level ozone, nitrate particles and nitrogen dioxide, all of which can cause respiratory problems. Furthermore, nitrogen oxides can lead to the formation of acid rain, and nitrous oxide (N₂O) in particular is a greenhouse gas and contributes to the destruction of the ozone layer. It is therefore desirable to reduce the emission of nitrogen oxides into the atmosphere, and new vehicles must comply with increasingly stringent limits on the acceptable levels of NO*ₓ* emissions.

In certain circumstances, NO*ₓ* emissions can be reduced by conventional exhaust gas catalysis, for example in a three-way catalyst comprising immobilised powders of platinum, palladium and rhodium. However, in diesel or lean-burn petrol combustion engines, a high concentration of oxygen is present in the exhaust gas, and this oxygen inhibits the catalysed breakdown of the nitrogen oxides in conventional systems. Consequently, a need has arisen for an alternative strategy to limit NO*ₓ* emissions.

One strategy, known as selective catalytic reduction or SCR, involves the introduction of a reagent comprising a reducing agent, typically a liquid ammonia source such as an aqueous urea solution, into the exhaust gas stream. The reducing agent is injected into the exhaust gas upstream of an exhaust gas catalyst, known as an SCR catalyst, typically comprising a mixture of catalyst powders such as titanium oxide, vanadium oxide and tungsten oxide immobilised on a ceramic honeycomb structure. Nitrogen oxides in the exhaust gas undergo a catalysed reduction reaction with the ammonia source on the SCR catalyst, forming gaseous nitrogen and water. An example of such a system is described in International Patent Application No. WO 2004/111401 A.

Although aqueous urea is a convenient and cost-effective source of ammonia for SCR systems, the maximum temperature at which it can be used is somewhat limited. Urea crystals tend to precipitate when the temperature of the solution is greater than approximately 70°C. Precipitation is undesirable because the precipitates can cause blockages in the delivery system, for example in the small-diameter outlets typically provided in an atomising nozzle. In addition, the formation of precipitates alters the concentration of the remaining solution, so that the effective quantity of ammonia delivered to the exhaust flow becomes uncertain. This could lead to inefficient catalysis and an insufficient reduction in NO*ₓ* emissions.

If aqueous urea is to be used effectively as a reagent in SCR, the system provided for dosing the exhaust gases with reagent should ideally be arranged to ensure that the temperature of the urea solution does not exceed the temperature at which precipitation occurs. However, the reagent must be discharged into the stream of hot exhaust gases, which are typically at a temperature of around 400°C at the point where the reagent enters the exhaust gas stream. The reagent will therefore almost inevitably reach a temperature in excess of that at which solid precipitates begin to form.

In the Applicant's United States Patent Application No. US2004/0093856, a solenoid-operated reagent dosing pump is described. Because this pump can generate high reagent pressures, it is able to blow precipitates through an outlet nozzle. In this way, any solid particles that form due to overheating of the reagent can be forced out of the dosing system and into the exhaust gas stream and are prevented from blocking the flow of reagent. Furthermore, the use of a high-pressure solenoid pump allows the delivery of small quantities of reagent at high frequencies, with the result that the mixture of exhaust gas and reagent flowing on to the SCR catalyst has a more uniform temperature and composition in comparison to other systems, in which larger quantities of reagent are delivered at lower frequencies. This improves the efficiency of the reduction reactions occurring at the catalyst, because the temperature and gas composition can be better maintained at their optimum levels for reaction.

In the Applicant's EP1878920 a pump for dosing fluids (the "doser"), particularly for dosing urea solution into the exhaust system of an internal combustion engine to allow a Selective Catalytic Reduction (SCR) catalyst to reduce oxides of nitrogen, is described.

The pumping work conducted by the doser is created by a solenoid coil acting on the magnetic armature of a plunger armature assembly. It is an ongoing concern to produce a compact dosing unit which can be packaged in the 'under bonnet 'environment, but conversely there is also the need to offer a solution which provides high dosed quantities. Due to the nature of the solenoid pump design shown in EP1878920, there are two options for meeting this need. Firstly, the frequency with which the doser is actuated may be increased. Secondly, the size of the pumping plunger and chamber may be increased, thus increasing the dosed quantity per injection event.

However, it is noted that dosers are often already run at a high frequency of operation at which premature failures and durability issues may be a concern. Increasing plunger size increases the variety of doser designs that need to be configured for the "under bonnet" environment. This has a knock on effect on manufacturing costs in serial volumes.

Against this background, it would be desirable to provide a reagent dosing device for use in an exhaust gas dosing system which overcomes or alleviates the abovementioned problems.

### Summary of the invention

According to a first aspect of the present invention there is provided a pump for pumping a liquid, the pump comprising: an inlet means; a first outlet means; a first pumping chamber for receiving the liquid from the inlet means; a plunger assembly arranged to move from a first position to a second position during a pumping stroke and from the second position to the first position during a return stroke and an actuator arrangement arranged to move the pumping assembly from the first position to the second position during the pumping stroke in order to pump the liquid from the first pumping chamber into the first outlet means; further comprising a second outlet means; a second pumping chamber for receiving the liquid from the inlet means wherein the plunger assembly is arranged to pump the liquid from the second pumping chamber into the second outlet means during the return stroke.

The present invention provides a pump for pumping a liquid in which a second pumping chamber is provided. During a pumping stroke liquid is pumped from a first pumping chamber to a first outlet and during a return stroke of the plunger liquid is pumped from a second pumping chamber to a second outlet. Two pumping events are provided per pump activation compared to a single pumping event in prior art systems. The pump according to an embodiment of the present invention therefore provides a pump for pumping greater amounts of liquid compared to known arrangements without needing to either increase the pumping frequency or to provide a substantially larger pump.

The inlet means and the first pumping chamber may be in fluid communication with a supply passage when the plunger assembly is in the first position. The supply passage may extend into or around the actuator arrangement so as to allow transfer of heat from the actuator arrangement to the liquid.

Conveniently, a fluid communication path may be provided between the first pumping chamber and the supply passage by one or more filling ports. The or each filling port may be blocked by the plunger assembly when the plunger assembly is in the second position.

Conveniently, the pump may further comprise a first delivery valve having a first delivery valve element arranged to move between a closed position and an open position and arranged to restrict the flow of liquid from the first pumping chamber through the first delivery valve to the first outlet means when the delivery valve element is in the closed position.

The actuator arrangement may be disposed substantially between the inlet means and the first outlet means. The first outlet means may be disposed at a first end of the plunger assembly and the second outlet means may be disposed at a second end of the plunger assembly. The pump may further comprise a return spring member arranged to act upon the plunger assembly in order to bias the plunger assembly towards the first position.

The pump may further comprise a second delivery valve having a second delivery valve element arranged to move between a closed position and an open position and arranged to restrict the flow of liquid from the second pumping chamber through the second delivery valve to the second outlet means when the second delivery valve element is in the closed position. The second delivery valve may comprise a second delivery valve spring arranged to bias the second delivery valve element towards the closed position.

The actuator arrangement may comprise a solenoid actuator comprising a solenoid coil, and the supply passage may extend into or around the solenoid coil. The solenoid coil may define an axis and the supply passage may be arranged so that, in use, the direction of flow of liquid in the supply passage is substantially parallel to the axis of the solenoid coil. The pump may further comprise a pole element and a coil former to carry the solenoid coil, wherein the coil former is disposed around at least a part of the pole element and the supply passage is defined partly by a surface of the pole element and partly by a surface of the coil former.

The liquid may preferably be a reagent for selective catalytic reduction.

The present invention extends to a dosing device comprising a pump according to the first aspect of the present invention and to an exhaust system comprising such a dosing device.

The dosing device may further comprise a common delivery chamber, the common delivery chamber being in communication with the first and second outlet means such that liquid is received from the first outlet means during the pumping stroke and is received from the second outlet means during the return stroke. The dosing device may further comprise a common nozzle valve assembly arranged to be in communication with an exhaust system.

### Brief description of the drawings

Embodiments of the present invention will now be described, by way of example, with reference to the accompanying drawings in which like reference numerals are used for like parts in which:
Figure 1 is a cross-sectional view of a dosing device useful for understanding the present invention, mounted in an exhaust pipe;
Figure 2 is a cross-sectional view at larger scale of a reagent pump for a dosing device useful for understanding the present invention;
Figures 3 to 8 shown a pump in accordance with an embodiment of the present invention (Figures 3 to 5 show a pumping stroke of the pump and Figure 6 to 8 show a return stroke of the pump);
Figure 9 shows a schematic of a pump according to Figures 3 to 8 in conjunction with a common chamber and nozzle assembly

### Detailed description of the invention

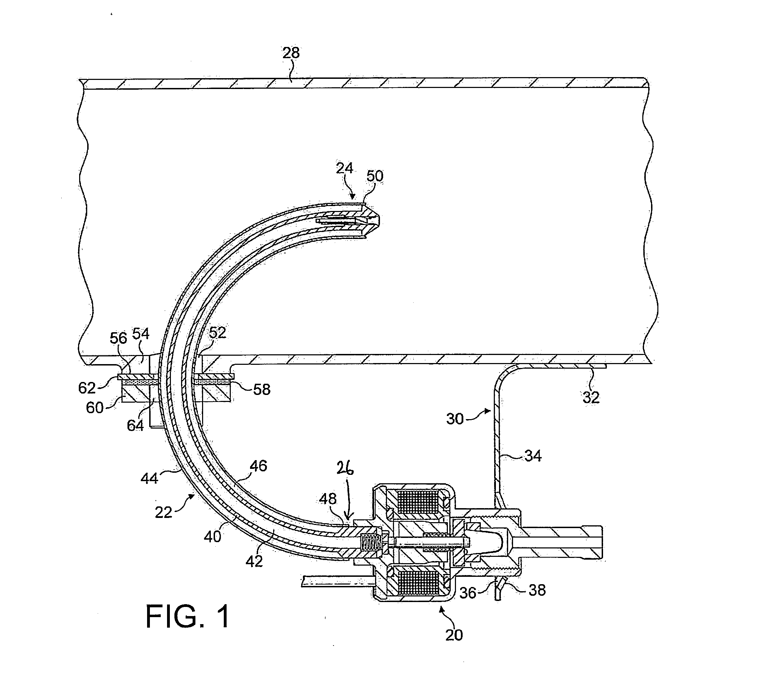

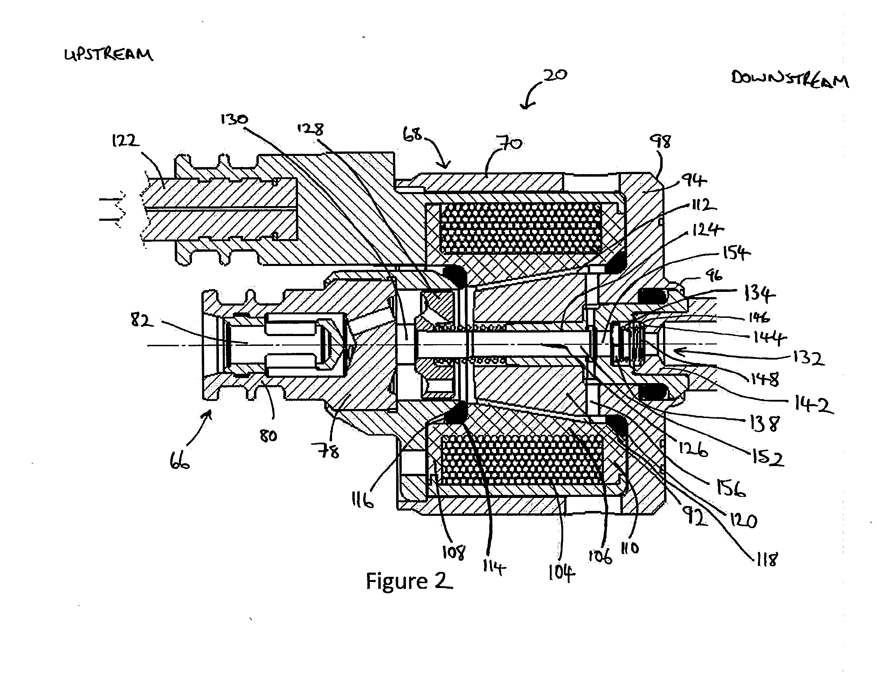

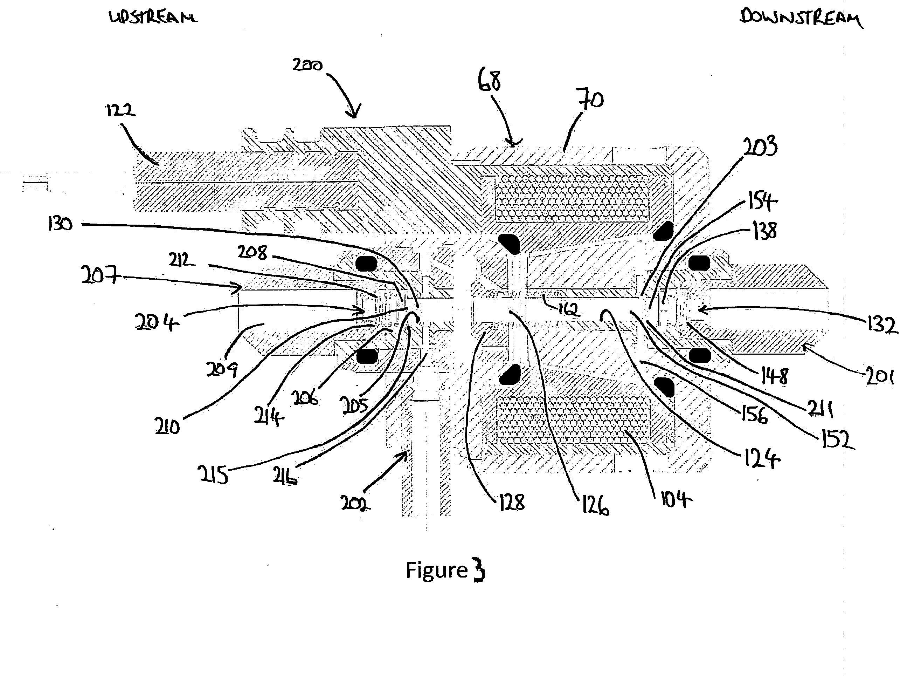

In this specification, the terms 'downstream' and 'upstream' refer to the direction of reagent flow through the (pump) device during dispensing of the reagent into the gas flow during normal use. For example, 'downstream' is leftwards in Figure 1 and rightwards in Figures 2 and 3.

Referring to Figure 1, the dosing device comprises a pump 20, a connecting pipe 22, and a dispenser 24. The connecting pipe 22 is generally semi-circular and is connected at a first end to the pump 20 by way of a pump connector 26. The dispenser 24 is located at a second end of the connecting pipe 22. In use, the device is mounted to an exhaust pipe 28 of an internal combustion engine (not shown). The dispenser 24 is disposed within a flow of exhaust gases within the exhaust pipe 28, while the pump 20 is disposed outside the exhaust pipe 28.

A mounting bracket 30 is provided to attach the pump 20 to the exhaust pipe 28. The mounting bracket 30 comprises an 'L'-shaped plate having a first portion 32 (horizontal in Figure 1) and a second portion 34 (vertical in Figure 1) perpendicular to the first portion 32. The first portion 32 of the mounting bracket 30 is attached to the exhaust pipe 28, for example by a welded joint. The second portion 34 of the mounting bracket 30 contains an aperture 36 and spring clips 38 disposed around the aperture, for example in the form of a star washer. The pump 20 is accommodated within the aperture 36 and is retained in the mounting bracket 30 by the spring clips 38.

The connecting pipe 22 comprises a tube 40 having a bore 42 through which reagent can pass. The tube 40 is capable of accommodating reagent at high pressure. The tube 40 is received within a jacket 44 for the connecting pipe 22 which defines a compartment 46 between the tube 40 and the jacket 44. The jacket 44 is sealed to the tube 40 at a first seal 48 at the outlet means or pump connector 26 and at a second seal 50 at the dispenser 24 so that the compartment 46 defines an enclosed volume. The compartment 46 is evacuated to limit the transfer of heat from the hot exhaust gases within the exhaust pipe 28 to the reagent in the bore 42 of the tube 40, in use, so as to prevent overheating of the reagent.

The connecting pipe 22 passes through a port 52 in a wall of the exhaust pipe 28. The port 52 is cylindrical, and has a surrounding collar 54 on the external surface of the exhaust pipe 28. The collar 54 is shaped to define a planar mounting face 56. An annular flange 58 is carried on the jacket 44 of the connecting pipe 22. The flange 58 is pressed towards the mounting face 56 by a clamping ring 60, and a sealing washer 62 is clamped between the flange 58 and the mounting face 56 to form a gas-tight seal. Threaded studs (not shown) are carried on the collar 54 and pass through complementary holes (not shown) in the sealing washer 62, flange 58 and clamping ring 60. The clamping ring 60 is held on the exhaust pipe 28 by way of internally-threaded nuts 64 screwed onto the studs.

Figure 2 shows a pump that may be used within the arrangement of Figure 1. It should be noted that the pump of Figure 2 is not an enlarged version of the pump shown in Figure 1 but performs the same function. It is further noted that the pump of Figure 2 is reversed compared to the pump of Figure 1.

Referring to Figure 2, the pump 20 comprises an inlet means being an inlet connector 66 for the supply of reagent fluid to the pump 20, a casing 68, and a pole element 70The inlet connector 66 is generally tubular and comprises a downstream portion 78 and an upstream portion 80. The downstream portion 78 has a larger diameter than the upstream portion 80 and carries external threads (not shown). The casing 68 may carry complementary internal threads (not shown) to mate with the external threads of the inlet connector 66. Alternatively, the components may be press fitted to one another and crimped.

The upstream portion 80 of the inlet connector 66 comprises a bore defining an inlet passage 82.

The casing 68 houses a solenoid coil 104 wound on to a coil former 106. The coil former 106 is a ring with a generally 'U'-shaped radial cross section. A first arm of the 'U' defines a first face 108 of the coil former 106 and a second arm of the 'U' defines a second face 110 of the coil former 106. The coil 104 is disposed between the first and second faces 108, 110 of the coil former 106. The coil former 106 is disposed around an inner pole piece 92 of the pole element 70, and a supply passage comprising a chamber 112 between the coil former 106 and the inner pole piece 92 is defined.

The coil former 106 comprises a shoulder 114 in the vicinity of the first face 108 of the former 106, in which a first O-ring 116 is located. The first O-ring 116 is arranged to create a seal between the casing 68 and the coil former 106. The second face 110 of the coil former 106 also carries an annular groove 118, adjacent to the inside of the coil former 106, in which a second O-ring 120 is provided. The second O-ring 120 is arranged to create a seal between a flange 94 of the pole element 70 and the second face 110 of the coil former 106. The first and second O-rings 116, 120 are made from a heat-resistant rubber and are arranged to elastically deform during assembly of the pump 20.

The coil 104 is in electrical communication with a power supply (not shown) by way of a supply cable 122. The power supply is capable of supplying a variable current to the coil 104 so as to induce a variable magnetic field around the coil 104. The arrangement of components within the pump 20 will first be described for the situation where no current is supplied to the coil 104, so that no magnetic field is present around the coil 104.

The pole element 70 includes an axial bore 124. A plunger 126 is slidably accommodated within the bore 124. A disc-shaped armature 128 is attached by an interference fit to the plunger 126 near to an upstream end 130 of the plunger 126. The armature 128 is a clearance fit within the casing 68. A delivery valve 132 is provided downstream of the plunger 126. The bore 124 of the pole element 70 comprises an enlarged diameter portion downstream of the plunger. The enlarged diameter portion defines a delivery valve/pumping chamber 134 and a shoulder or seating surface 136 of the delivery valve 132. A delivery valve element 138, comprising a disc, is provided within the delivery valve chamber 134.

The pump connector 26 (not shown in Figure 2) is defined by an end region 142 of the tube 40 (not shown in Figure 2) of the connecting pipe 22 with greater wall thickness than that of the tube 40 distant from the pump connector 26. A portion of the end region 142 is accommodated within a tubular projection 96 of the pole element 70. The bore of the pump connector 26 has an increased diameter in a portion of the end region 142 adjacent to the delivery valve chamber 134 so as to define a shoulder 144 of the tube 40 and a delivery spring chamber 146.

A delivery valve spring 148, comprising a compression spring, is accommodated within the delivery spring chamber 146. The spring 148 acts upon the shoulder 144 of the tube 40 and the delivery valve element 138 to bias the delivery valve element 138 against the seating surface 136 of the pole element 70 to close the delivery valve 132. The bore 42 of the tube 40 of the connecting pipe 22 (not shown Figure 2) is in communication with the delivery valve chamber 134 (not shown in Figure 2).

The bore 124 of the pole element 70, the delivery valve element 138 and a downstream end 152 of the plunger 126 together define a first pumping chamber 154 downstream of the plunger 126. The pumping chamber 154 is in communication with the chamber 112 by way of filling ports 156 comprising radial passages provided in the inner pole piece 92 of the pole element 70.

The bore 124 of the pole element 70 is enlarged in a region adjacent to the armature 128 so as to define a shoulder 158 within the bore and a return spring chamber 160. A return spring 162 comprising a compression spring is disposed within the return spring chamber 160. The return spring 162 acts upon the shoulder 158 of the bore 124 and the armature 128 to bias the armature 128 against a lift stop so that the armature 128 acts as a stopping means for the plunger.

When a current flows through the coil 104, an electromagnetic circuit arises which encompasses the inner pole piece 92, the armature 128 and the casing 68, which functions as an outer pole piece. The components in the electromagnetic circuit define a electromagnetic structure or actuator arrangement and are arranged so that the armature 128 experiences a magnetic force opposed to the biasing force of the return spring 162. When the magnetic force is strong enough to overcome the biasing force of the return spring 162, the armature 128 moves towards the inner pole piece 92.

Movement of the armature 128 drives a pumping stroke of the plunger 126 by causing the plunger 126 to move in a downstream direction within the bore 124 of the pole element 70. The plunger 126 moves past the filling ports 156 to close the filling ports 156 and substantially prevent further passage of reagent into the pumping chamber 154. The volume of the first pumping chamber 154 is reduced due to the movement of the plunger 126, so that the pressure of the reagent in the first pumping chamber 154 increases. The reagent imparts a force on the delivery valve element 138 in a direction opposed to the biasing force imparted on the delivery valve element 138 by the delivery valve spring 148.

When the pressure of the reagent in the first pumping chamber 154 exceeds a threshold value, the force acting on the delivery valve element 138 due to the reagent becomes sufficient to overcome the biasing force of the delivery valve spring 148 and the delivery valve element 138 moves away from the seating surface 136 of the pole element 70 to open the delivery valve 132. Reagent in the first pumping chamber 154 can then flow around the delivery valve element 138 and into the bore 42 of the connecting pipe 22, by way of suitable channels within the pump connector 26. The pressure of reagent in the bore 42 of the connecting pipe 22 therefore increases (features 22, 26 and 42 are shown in Figure 1).

When the current flow through the coil 104 is switched off, the magnetic field around the coil 104 diminishes. The magnetic force acting on the plunger 126, by way of the armature 128, diminishes and can no longer overcome the biasing force of the return spring 162. The action of the return spring 162 on the armature 128 drives a return stroke of the plunger 126, in which the plunger 126 returns to its initial position in which the armature 128 rests against a lift stop. The volume of the pumping chamber 154 increases and communication between the filling ports 156 and the pumping chamber 154 is restored. As the plunger moves in the upstream direction a low pressure region develops within the pumping chamber. As a result of the pressure difference between the pumping chamber 154 and filling ports 156, reagent can flow through the filling ports 156 into the pumping chamber 154, to replenish the reagent in the pumping chamber 154 in preparation for the next pumping stroke.

Turning now to Figures 3 to 8 a pump 200 in accordance with an embodiment of the present invention is shown. Like features with the pump 20 of Figure 2 are denoted by like reference numerals.

Referring to Figure 3, reagent is supplied to the pump 200 via an inlet port 202 located in the casing 68.

As seen in Figure 2 the inlet connector 66 is co-axial with the bore 124 of the pole element 70. In Figure 3, however, the inlet port 202 through which reagent fluid is supplied to the pump 200 is not coaxial with the bore 124 of the pole element 70.

At the downstream end of the pump 200 a connector 201 is provided. The connector 201 defines a fluid path between the first delivery valve 132 and the exhaust system. (For example, the connector 201 may be in communication with the bore 42 of the tube 40 of the connecting pipe 22 shown in Figure 1 (not shown in Figure 3)).

From Figure 3 it can be seen that the filling ports 156 open into a gallery 203 which in turn connects to the first delivery chamber 154.

In Figure 3 a second delivery valve 204 is located upstream of the plunger 126. For the avoidance of doubt the downstream end of the pump 200 of Figure 3 comprises the first delivery valve 132 and the upstream end of the pump 200 comprises the second delivery valve 204.

The delivery valve 204 comprises a bore 205 for receiving the plunger 126. The bore 205 comprises an enlarged diameter portion upstream of the plunger 126. The enlarged diameter portion defines a second delivery valve chamber 206. A second delivery valve element 208, comprising a disc, is provided within the second delivery valve chamber 206. The second delivery valve is provided with a nozzle tube 209.

A second delivery valve spring 212, comprising a compression spring, is accommodated within the second delivery spring chamber 206. The spring 212 acts upon an upstream end 214 of the chamber 206 and the second delivery valve element 208 to bias the delivery valve element 208 against a seating surface 215 defined between the bore 205 and the enlarged diameter portion of the bore. The spring 212 acts to close the delivery valve 204. The second delivery valve 204 and second delivery valve chamber 206 is in communication via a connector 207, with the exhaust system (For example, the connector 207 may be in communication with the bore 42 of the tube 40 of the connecting pipe 22 shown in Figure 1 (not shown in Figure 3)).

The bore 205 of the second delivery valve 204, the second delivery valve element 208 and the upstream end 130 of the plunger 126 together define a second pumping chamber 210 upstream of the plunger 126. The second pumping chamber 210 is in communication with the inlet port 202 by way of secondary filling ports 216 comprising radial passages provided in the casing 68.

The operation of the pump 200 will now be described with respect to Figures 3 to 8.

The pump 202 of Figure 3 is shown in a similar quiescent state as the pump of Figure 2 and the upstream end 130 of the plunger 126 is extended and fully occupying the second pumping chamber 210 (this corresponds to the first position of the plunger assembly). The first pumping chamber 154 is in fluid communication via the gallery 203 with the filling ports 156. Both delivery valves 132, 204 are closed.

As described above, as the coil 104 is actuated, the armature 128 and plunger 126 are drawn in a downstream direction towards the first pumping chamber 154. This movement of the plunger 126 cuts off the filling ports 156 to the first pumping chamber 154 and compresses fluid as before. It is noted that the gallery 203 defines a sharp edge 211 with the bore 124. There is therefore a sharp cut off of fluid between the filling ports 156 and the first pumping chamber 154 as the downstream end 152 of the plunger 126 passes the edge 211.

As described in relation to Figure 2 above the pressure in the pumping chamber 154 then rises and when it exceeds a threshold value the force acting on the delivery valve element 138 overcomes the delivery valve spring 148 thereby allowing reagent to flow around the delivery valve element 138 and into the bore 42 of the connecting pipe (shown in Figure 1).

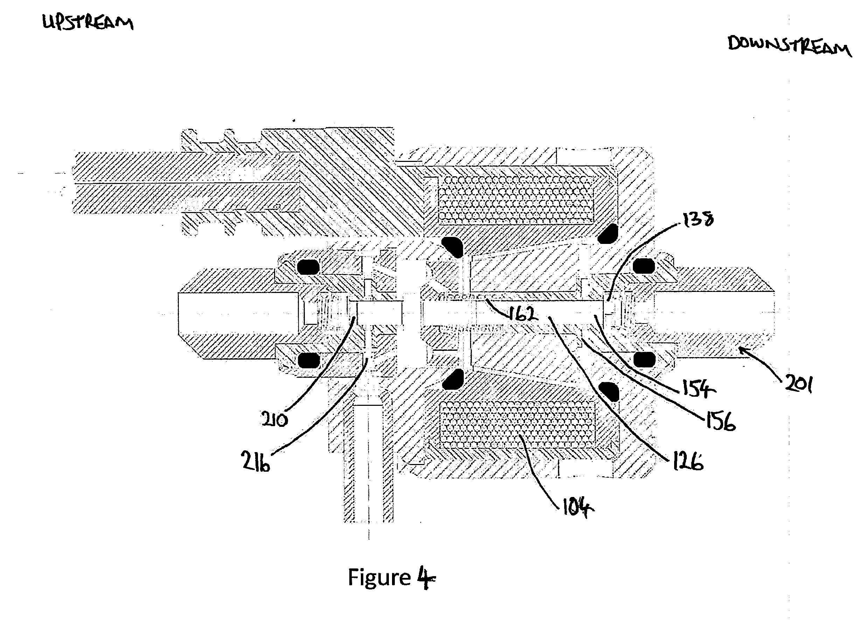

In Figure 4, as the plunger 126 moves in the downstream direction, it compresses fluid in the first pumping chamber 154. At the same time, the upstream end 130 of the plunger 126 moves forward (in other words it moves in the downstream direction) drawing low pressure (vacuum) in the secondary pumping chamber 210 with the secondary delivery valve element 208 in its closed position. As the tip of the plunger 126 moves past the secondary filling ports 216 reagent is drawn in to the chamber 210 due to a pressure differential.

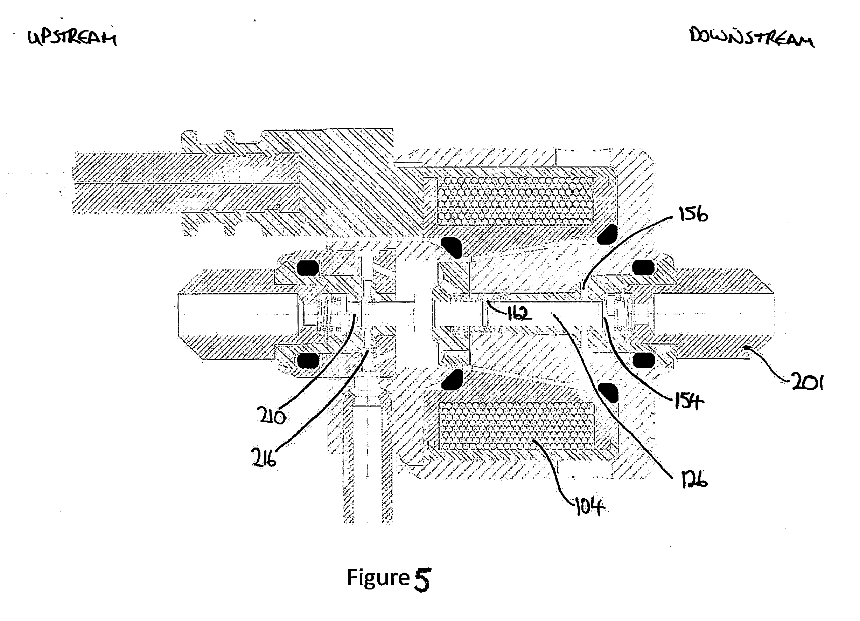

Figure 5 shows the plunger 126 in its most downstream position (this corresponds to the second position of the plunger assembly) in which it occupies the first pumping chamber 154.

As the plunger 126 moves in the downstream direction from the Figure 4 position to the Figure 5 position, the pressure in the first pumping chamber 154 rises and when it exceeds a threshold value the force acting on the delivery valve element 138 overcomes the delivery valve spring 148 thereby allowing reagent to flow around the delivery valve element 138 and connector 201 for delivery into the exhaust system. As noted above, as the plunger 126 reaches its end of stroke as it moves in the downstream direction it will have evacuated the primary pump chamber 154 and fully filled the secondary chamber 210 at the opposite end of the plunger 126.

As noted above when the current flow through the coil 104 is switched off, the magnetic force acting on the plunger 126, by way of the armature 128, diminishes and can no longer overcome the biasing force of the return spring 162.

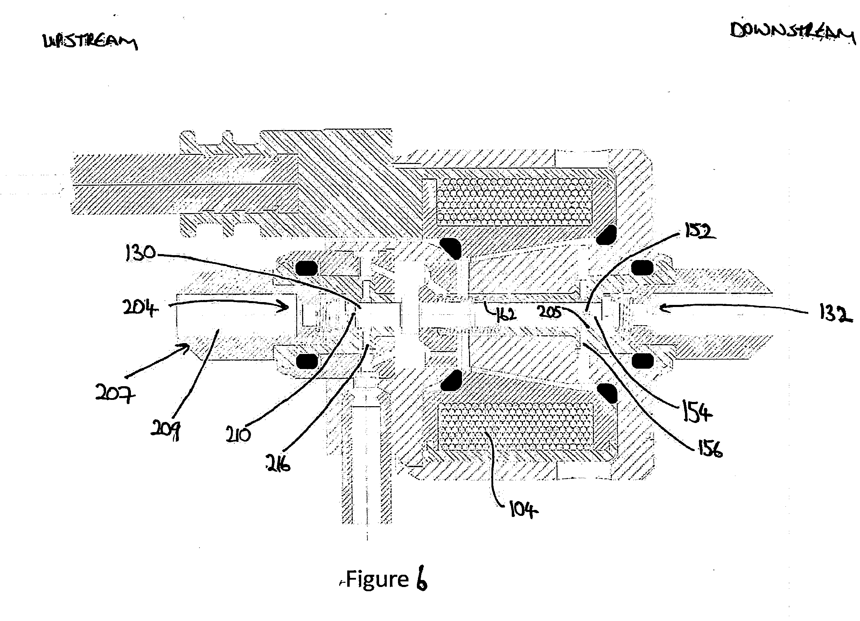

The spring 162 drives a return stroke of the plunger 126, in which the plunger 126 returns to its initial position in which the armature 128 rests against a lift stop. Figures 6-8 show the return stroke.

In Figure 6, as the return stroke of the plunger 126 begins, both delivery valves (132, 204) are closed. Reagent flow from the filling ports 216 to the second pumping chamber 210 is closed off. The downstream end 152 of the plunger 126 has not yet passed by the edge 211 and so a vacuum is being drawn in the first pumping chamber 154.

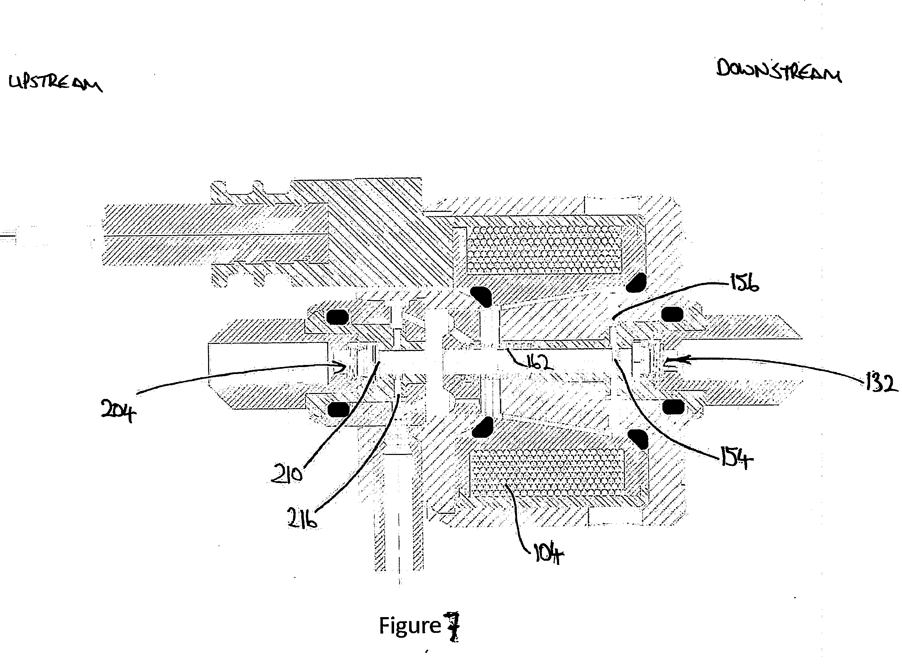

In Figure 7, as the spring 162 drives the plunger 126 back to its initial position (in other words moves the plunger 126 in the upstream direction of Figure 6) the filling ports 156 are opened thereby allowing reagent to fill the first pumping chamber 154 and the secondary filling ports 216 are closed. As a result of the movement of the plunger 126 and the closing of the secondary filling ports 216 the volume of the second pumping chamber 210 is reduced so that the pressure of reagent in the second pumping chamber 210 increases.

The reagent pressure increases until its pressure overcomes the pre-load of the secondary delivery valve element 208 provided by the second delivery valve spring 212. A fluid path is then opened between the second pumping chamber 210 and the nozzle tube 209 of the connector 207. As the plunger-armature assembly (126/128) reaches its original state the fluid reagent within the secondary pumping chamber 210 is evacuated in to nozzle tube 209. The second pumping chamber 210 is then fully occupied by the tip of the plunger 126.

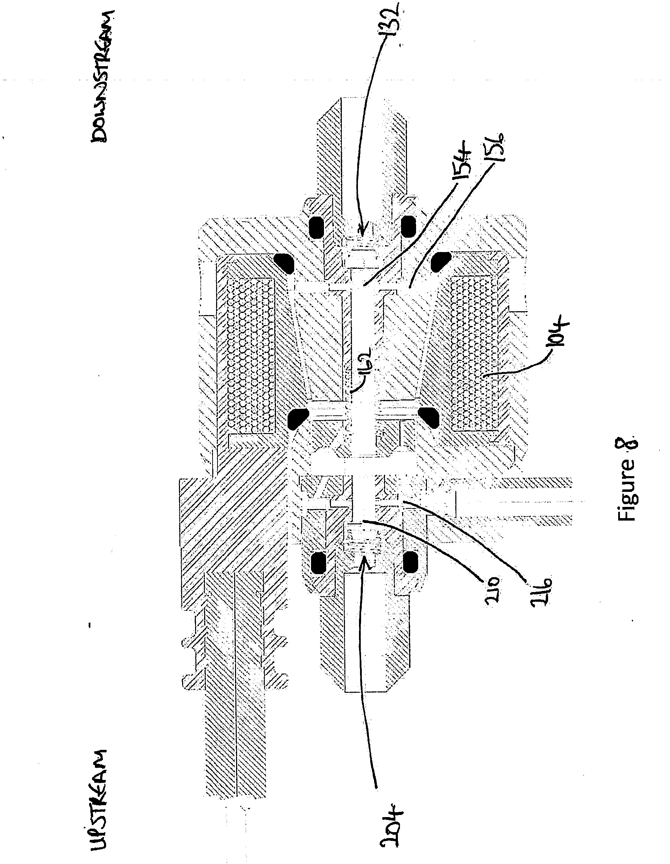

As shown in Figure 8, once the reagent has been vacated from the pumping chamber 210, the secondary delivery valve element 208 closes. Both delivery valves 204 and 132 are closed and the pump 200 has returned to the quiescent state of Figure 3.

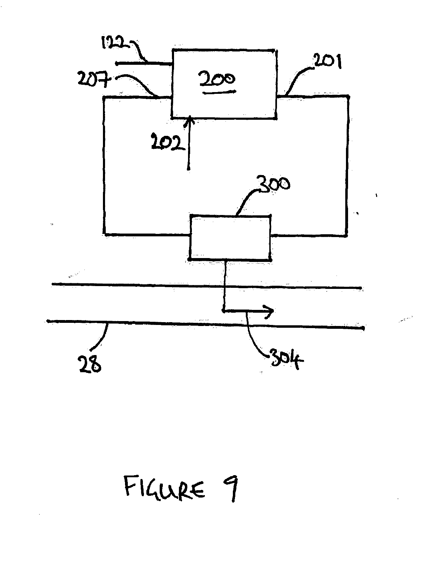

Instead of being directly connected to the exhaust system, the first delivery valve 132 (and connector 201) and second delivery valve 204 (and connector 207) may, as shown in Figure 9, be arranged to deliver reagent to a common chamber 300 and nozzle valve assembly for delivery in to the exhaust system 28.

It is noted that the pressure (of reagent) generated by the plunger 126 delivering the pumped volume in to the common chamber 300 is sufficient to reach the nozzle opening pressure of the nozzle valve assembly into the exhaust stream 304.

Further variations and modifications not explicitly described above may also be contemplated without departing from the scope of the invention as defined in the appended claims.

## Claims

1. A pump (200) for pumping a liquid, the pump comprising:
an inlet means (202);
a first outlet means (201);
a first pumping chamber (154) for receiving the liquid from the inlet means;
a plunger assembly (126, 128) arranged to move from a first position to a second position during a pumping stroke and from the second position to the first position during a return stroke and
an actuator arrangement (70, 104) arranged to move the pumping assembly from the first position to the second position during the pumping stroke in order to pump the liquid from the first pumping chamber (154) into the first outlet means (201);
further comprising
a second outlet means (207)
a second pumping chamber (210) for receiving the liquid from the inlet means
wherein
the plunger assembly (126, 128) is arranged to pump the liquid from the second pumping chamber (210) into the second outlet means (207) during the return stroke.

2. A pump as claimed in any Claim 1, wherein the inlet means (202) and the first pumping chamber (154) are in fluid communication with a supply passage (112) when the plunger assembly (126, 128) is in the first position.

3. A pump as claimed in Claim 2, wherein a fluid communication path is provided between the first pumping chamber (154) and the supply passage (112) by one or more filling ports (156).

4. A pump as claimed in Claim 3, wherein the or each filling port (156) is blocked by the plunger assembly when the plunger assembly (126, 128) is in the second position.

5. A pump as claimed in any preceding claim, further comprising a first delivery valve (132) having a first delivery valve element (138) arranged to move between a closed position and an open position and arranged to restrict the flow of liquid from the first pumping chamber (154) through the first delivery valve (132) to the first outlet means (201) when the delivery valve element (138) is in the closed position.

6. A pump as claimed in any preceding claim, wherein the first outlet means (201) is disposed at a first end of the plunger assembly (126, 128) and the second outlet means (207) is disposed at a second end of the plunger assembly (126, 128)

7. A pump as claimed in any preceding claim, further comprising a second delivery valve (204) having a second delivery valve element (208) arranged to move between a closed position and an open position and arranged to restrict the flow of liquid from the second pumping chamber (210) through the second delivery valve (204) to the second outlet means (207) when the second delivery valve element (208) is in the closed position

8. A pump as claimed in Claim 7, wherein the second delivery valve comprises a second delivery valve spring (212) arranged to bias the second delivery valve element (208) towards the closed position.

9. A pump as claimed in any preceding claim, wherein the actuator arrangement comprises a solenoid actuator having a solenoid coil, the solenoid coil (104) defining an axis and the supply passage (112) being arranged so that, in use, the direction of flow of liquid in the supply passage (112) is substantially parallel to the axis of the solenoid coil (104).

10. A pump as claimed in Claim 9, further comprising a pole element (70) and a coil former (106) to carry the solenoid coil (104), wherein the coil former (106) is disposed around at least a part of the pole element (70) and the supply passage (112) is defined partly by a surface of the pole element (70) and partly by a surface of the coil former (106).

11. A pump according to any preceding claim, wherein the liquid is a reagent for selective catalytic reduction.

12. A dosing device comprising a pump according to any preceding claim.

13. A dosing device as claimed in Claim 12, further comprising a common delivery chamber (300), the common delivery chamber being in communication with the first and second outlet means (201, 207) such that liquid is received from the first outlet means (201) during the pumping stroke and is received from the second outlet means (207) during the return stroke.

14. A dosing device as claimed in Claim 13, further comprising a common nozzle valve assembly arranged to be in communication with an exhaust system.

15. An exhaust system comprising a dosing device as claimed in any one of claims 12 to 14.
